(19) **Europäisches Patentamt**

**European Patent Office**

**Office européen des brevets**

(11) Publication number: **0 210 962**
**B1**

(12) **EUROPEAN PATENT SPECIFICATION**

(45) Date of publication of patent specification :
15.03.89

(51) Int. Cl.⁴ : **B 60 R 25/02**

(21) Application number : **86830219.1**

(22) Date of filing : **23.07.86**

(54) **Anti-theft steering lock device for motor vehicles.**

(30) Priority : **02.08.85 IT 5367785 U**

(43) Date of publication of application :
**04.02.87 Bulletin 87/06**

(45) Publication of the grant of the patent :
**15.03.89 Bulletin 89/11**

(84) Designated contracting states :
**AT BE CH DE FR GB IT LI LU NL SE**

(56) References cited :
**DE-A- 1 817 784**
**DE-B- 2 829 192**
**FR-A- 2 273 694**
**FR-A- 2 480 213**
**GB-A- 2 024 924**
**US-A- 3 914 967**

(73) Proprietor : **MAGNETI MARELLI S.p.A.**
**Piazza Sant'Ambrogio 6**
**I-20123 Milan (IT)**

(72) Inventor : **Mauri, Carlo**
**Via della Cava 3**
**I-20050 Sovico (Milano) (IT)**
Inventor : **Lattanzi, Giuseppe**
**Via R. Fucini 4**
**I-20092 Ciniselio Balsamo (Milano) (IT)**

(74) Representative : **Quinterno, Giuseppe et al**
**c/o Jacobacci-Casetta & Perani S.p.A. Via Alfieri, 17**
**I-10121 Torino (IT)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to anti-theft steering lock devices for motor vehicles, particularly of the type associated with an ignition and starter switch.

The invention relates particularly to an anti-theft steering lock device comprising

a stator,

a cylinder lock operable by means of a key,

a bolt movable axially between a retracted position and an extended position in which it can lock the steering ; the bolt being kept in the retracted position by a cam fixed to the cylinder of the lock against the action of resilient means biasing it towards the extended position ; and

security means for allowing the movement of the bolt to the extended position only when the key is removed from the lock, the security means including a latch member slidable radially in a seat of the stator and adapted to be thrust radially outwardly, as a result of the introduction of the key into the lock, towards a working position in which it can cooperate with retaining means for retaining the bolt in the retracted position until the subsequent removal of the key.

In devices of this type known at present, the latch member cooperates with a movable roller located in an aperture formed at one end of the shaft of the bolt and is biassed by a leaf spring, the roller locking the bolt in the retracted position when the latch member assumes its working position. This roller is a component of no small cost in that it must be made from expensive steel, worked with great precision by a machine tool and heat-treated by tempering and case-hardening operations. A device disclosing a roller which locks the bolt in the retracted position is shown in US-A- 3914967.

The object of the present invention is to provide a device of the type specified which can be made more simply and cheaply than known devices.

In order to achieve this object, the present invention provides an anti-theft steering lock device of the type specified above, the main characteristic of which lies in the fact that the retaining means comprise a stop leaf spring fixed to the bolt ; the stop leaf spring having a free end which is so inclined that it, on one hand is forced against the latch when the latch is in its outer position and the bolt moves from its extended position to its retracted position, and, on the other hand, reacts with the latch so that it prevents the bolt from returning to the extended position as long as the latch remains in its working position.

According to a further characteristic, the stop leaf spring is associated with a further leaf spring also fixed to the bolt and having a free end which can interfere resiliently with the latch when the bolt is held in its extended position and thrusts the latch radially towards the cylinder lock when the key is withdrawn from the lock, to disengage the stop spring and allow the bolt to return to the extended position under the action of the said resilient biasing means.

Both the stop leaf spring and the unlocking leaf spring may be made, conveniently, from blanked sheet metal. They are thus members which are simple and cheap to make.

Further characteristics and advantages of the device according to the invention will become apparent from the detailed description which follows with reference to the appended drawings, provided purely by way of non-limiting example, in which :

Figure 1 is a partially-sectioned, schematic, side-elevational view of an anti-theft steering lock device according to the invention,

Figures 2 and 3 are schematic, partially-sectioned side views showing part of the device of Figure 1, on an enlarged scale, in two different operative conditions, and

Figures 4 and 5 show leaf springs usable in the device according to the invention.

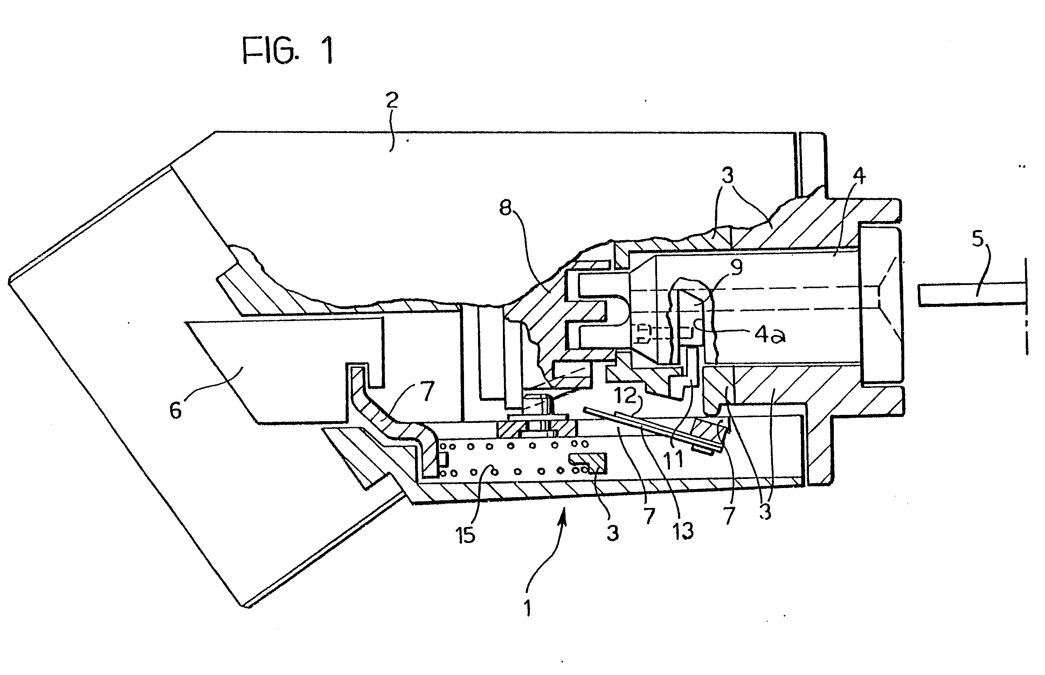

With reference to the drawings, and particularly to Figure 1, an anti-theft steering lock device associated with an ignition and starter switch of a motor vehicle is generally indicated 1. The casing of the device is indicated 2 and by 3 is indicated a fixed body, or stator, housing a rotatable cylinder lock 4 operable by means of a key 5. In known manner, the key 5 enables the cylinder 4 to be turned to three different angular positions of which the first corresponds to the deactivated condition of the switch contained within the casing, the second corresponds to the condition in which the ignition and operating circuit is connected, while the third is the starting position.

A bolt 6 is controlled by a shaped rod 7 movable axially within the casing 2. The translational movement of the rod 7 is driven in known manner via a cam 8 fixed to the cylinder 4 of the lock, as a result of the operation of the latter by the key 5.

A radial seat 4a is formed in the cylinder 4 and a shaped member 9 movable therein serves to sense the presence of the key.

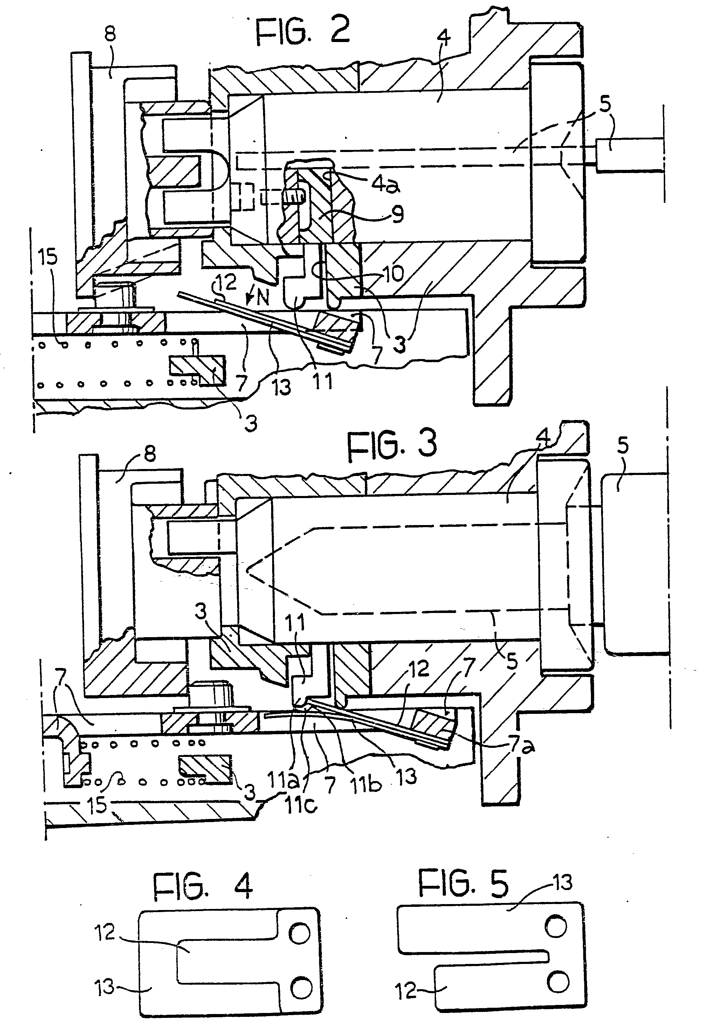

A corresponding radial passage 10 is formed in the stator 3 and a shaped latch member 11 is movable therein. When the key 5 is in the position of insertion in or removal from the cylinder 4, the radial seats 4a and 10 are aligned with each other ; when the key is fully inserted in the cylinder 4, the sensor 9 thrusts the latch 11 radially outwardly towards its working position (Figure 2) in which the latch remains when the key 5 is rotated (Figure 3).

The end of the control rod 7 within the casing 2 has an inclined transverse appendage 7a to which are fixed the ends of two leaf springs 12 and 13, of which the first is shorter than the second. The assembly of the springs 12 and 13, viewed in plan in the direction of the arrow IV of Figure 2, is shown in Figure 4. When the bolt 6 is in its extended position, these springs extend undeformed in a plane at an angle to the general direction of movement of the rod 7, their free ends facing the lock. Moreover, these springs have respective lengths such that they both interfere resiliently with the radially-outermost end of the latch member 11 when the bolt 6 moves from its extended position to its retracted condition. When the bolt has reached this position, the leaf spring 12, which is shorter, is bent and passes over a radial protuberance 11a of the latch member 11 (Figure 3) and jams, or catches against, a shoulder 11b of this protuberance. The bearing surface of this shoulder is inclined so as to be substantially perpendicular to the direction of the spring 12.

When the bolt 6 is in the retracted position, the spring 13 interferes resiliently with an appropriately-rounded protuberance 11c of the latch member 11 (Figure 3).

The bolt 6 is thus retained in its retracted position due to both the retaining action of the cam 8 and the jamming of the leaf spring 12 against the latch member 11.

The subsequent movement of the bolt 6 to the extended, locking position is possible only when the key 5 is withdrawn from the lock : in this condition, the radial seats 4a and 10 are aligned again and the spring 13 exerts a radial pressure on the latch member 11 to thrust the latch and the sensor 9 radially inwardly of the cylinder 4. Thus, the spring 12 can be freed and, under the action of a return spring 15 acting on the control rod 7, the bolt can move to the locked position.

The springs 12 and 13 may be formed easily and cheaply from blanked sheet metal.

With regard to these springs, it should be noted that the more common solution of the present invention lies in the use of two leaf spring elements for catching the stop latch member in the retracted position of the bolt and for facilitating and ensuring sufficient radial thrust on the latch member to unlock it, respectively. It is not necessary for the two leaf springs intended for these purposes to be separate : as shown in Figure 5, it is possible to blank an element from a single piece with two adjacent, parallel sprung appendages of different lengths, each fulfilling the function of one of the two springs described above.

In the anti-theft steering lock device according to the invention, the security retaining device described above has a simple construction and is cheap because of both the limited number of components needed and the cheapness of the required workings and assembly, which may be easily automated.

## Claims

1. Anti-theft steering lock device for motor vehicles, particularly of the type associated with an ignition and starter switch, comprising
   a stator (2,3)
   a cylinder lock (4) operable by means of a key (5),
   a bolt (6,7) movable axially between a retracted position and an extended position in which it can lock the steering ; the bolt (6,7) being kept in the retracted position by a cam (8) fixed to the cylinder of the lock (4) against the action of resilient means (15) biasing it towards the extended position ; and security means (9 to 13) for allowing the movement of the bolt (6,7) to the extended position only when the key (5) is removed from the lock (4), the security means including a latch member (11) slidable radially in a seat (10) of the stator (3) and adapted to be thrust radially outwardly, as a result of the introduction of the key (5) into the lock, towards a working position in which it can cooperate with retaining means (12) for retaining the bolt (6) in the retracted position until the subsequent removal of the key (5), characterised in that the retaining means comprise a stop leaf spring (12) fixed to the bolt (6,7) ; the stop leaf spring (12) having a free end which is so inclined that it, on one hand, is forced against the latch (11) when the latch is in its outer position and the bolt (6,7) moves from its extended position to its retracted position, and, on the other hand, reacts with the latch (11) so that it prevents the bolt (6,7) from returning to the extended position as long as the latch remains in its working position.

2. Device according to Claim 1, characterised in that the stop leaf spring (12) is associated with a further leaf spring (13) also fixed to the bolt (6,7) and having a free end which can interfere resiliently with the latch (11) when the bolt (6,7) is held in its extended position and thrusts the latch (11) radially towards the cylinder lock (4) when the key (5) is withdrawn from the lock, to disengage the stop spring (12) and allow the bolt (6,7) to return to the extended position under the action of the said resilient biasing means (15).

3. Device according to Claim 1 or Claim 2, characterised in that the stop leaf spring (12), in its undeformed condition, lies in a plane inclined to the direction of movement of the bolt (6,7).

4. Device according to any one of the preceding claims, characterised in that the said further leaf spring, or unlocking spring (13), also lies in a plane inclined to the direction of movement of the bolt (6,7) in its undeformed condition.

5. Device according to Claim 3, characterised in that the latch (11) has a radial projection (11a) defining a stop shoulder (11b) which the stop leaf spring (12) can engage ; the surface of the shoulder (11b) being so inclined that the stop leaf spring (12) bears thereon substantially orthogonally.

6. Device according to Claim 5, characterised in that the projection (11a) of the latch (11) is rounded to facilitate the passing of the stop leaf spring (12) over it.

7. Device according to any one of Claims 4 to 6, characterised in that the latch (11) has a radial protuberance (11c) for interfering with the further leaf spring (13).

8. Device according to Claim 7, characterised in that the protuberance (11c) of the latch (11) is rounded.

9. Device according to any one of the preceding claims, characterised in that the leaf springs (12,13) are of blanked sheet metal.

10. Device according to any one of Claims 2 to 9, characterised in that the leaf springs (12, 13) are separate from each other.

11. Device according to Claim 10, characterised in that the leaf springs (12,13) are fixed above each other to a control rod (7) fixed to the bolt (6), the stop spring (12) being shorter than the unlocking spring (13).

12. Device according to any one of Claims 2 to 9, characterised in that the leaf springs are constituted by two parallel spring tabs adjacent a single blanked sheet metal element, the spring tabs having different lengths.


**Patentansprüche**

1. Lenkradschloßdiebstahlssicherungsvorrichtung für Kraftfahrzeuge, insbesondere derart, welche mit einem Zünd- und Startschalter ausgestattet ist mit

einem Gehäuse (2, 3)

einem Zylinderschloß (4), welches mittels eines Schlüssels (5) betätigt werden kann,

einem Bolzen (6, 7), welcher zwischen einer zurückgezogenen Position und einer vorgeschobenen Position axial beweglich ist, in welcher sie die Lenkung abschließen kann ; der Bolzen (6, 7) wird in der zurückgezogenen Position durch einen Kamm (8) gehalten und ist an dem Zylinder des Schlosses (4) befestigt, gegen die Wirkung einer Federvorrichtung (15), welche ihn gegen die vorgeschobene Position drückt ; und

eine Sicherheitsvorrichtung (9 - 13), welche eine Bewegung des Bolzens (6, 7) in Richtung der vorgeschobenen Position nur dann erlaubt, wenn der Schlüssel (5) aus dem Schloß (4) zurückgezogen wird, wobei die Sicherheitsvorrichtung einen Riegel (11) miteinschließt, welcher in einem Sitz (10) des Gehäuses (3) radial beweglich ist und dazu dient, als Ergebnis der Einführung des Schlüssels (5) in das Schloß gegen eine Arbeitsposition in welcher es mit einer Befestigungsvorrichtung (12) zur Befestigung des Bolzens (6) in der zurückgezogenen Position zusammenarbeiten kann, radial nach außen gedrückt zu werden, bis zum anschließenden Ausziehen des Schlüssels (5), dadurch gekennzeichnet, daß die Befestigungsvorrichtung eine Arretierungsblattfeder (12) umfaßt, welche an dem Bolzen (6, 7) befestigt ist, wobei die Arretierungsblattfeder (12) ein freies Ende hat, welches einerseits derartig geneigt ist, daß es auf der einen Seite gegen den Riegel (11) gedrückt wird, wenn der Riegel in seiner äußeren Position ist und sich der Bolzen (6, 7) von seiner vorgeschobenen Position in seine zurückgezogene Position bewegt, und andererseits reagiert es mit dem Riegel (11), so daß es den Bolzen (6, 7) davon abhält, von der zurückgezogenen in die vorgeschobene Position zu gelangen, solange wie der Riegel in seiner Arbeitsposition verweilt.

2. Vorrichtung nach Anspruch 1, dadurch gekennzeichnet, daß die Arretierungsblattfeder (12) mit einer weiteren Blattfeder (13) verbunden ist, welche ebenso an dem Bolzen (6, 7) befestigt ist und ein freies Ende hat, welches federnd mit dem Riegel (11) interferieren kann, wenn der Bolzen (6, 7) in seiner vorgeschobenen Position gehalten wird und er den Riegel (11) radial gegen das Zylinderschloß (4) drückt, wenn der Schlüssel (5) aus dem Schloß gezogen wird, um die Arretierungsblattfeder (12) zu entriegeln und dem Bolzen (6, 7) die Rückkehr in die vorgeschobene Position durch Wirkung der druckausübenden Federvorrichtung (15) zu erlauben.

3. Vorrichtung nach Anspruch 1 oder Anspruch 2, dadurch gekennzeichnet, daß die Arretierungsblattfeder (12) in ihrem undeformierten Zustand in einer Ebene liegt, die schräg zu der Richtung der Bewegung des Bolzens (6, 7) ist.

4. Vorrichtung nach jedem der vorangegangenen Ansprüche, dadurch gekennzeichnet, daß die weitere Blattfeder oder Entriegelungsfeder (13) ebenso in einer Ebene liegt, die schräg zu der Richtung der Bewegung des Bolzens (6, 7) in ihrem undeformierten Zustand ist.

5. Vorrichtung nach Anspruch 3, dadurch gekennzeichnet, daß der Riegel (11) einen radialen Vorsprung (11a) hat, welcher eine Arretierungsschulter (11b) bestimmt, in welche die Arretierungsblattfeder (12) einrasten kann, wobei die Oberfläche der Schulter (11b) derartig geneigt ist, daß die Arretierungsblattfeder (12) ungefähr orthogonal dazu steht.

6. Vorrichtung nach Anspruch 5, dadurch gekennzeichnet, daß der Vorsprung (11a) des Riegels (11) abgerundet ist, um das Vorüberziehen der Arretierungsblattfeder (12) über ihn zu erleichtern.

7. Vorrichtung nach jedem der Ansprüche 4 bis 6, dadurch gekennzeichnet, daß der Riegel (11) einen radialen Höcker (11c) zur Interferierung mit der weiteren Blattfeder (13) hat.

8. Vorrichtung nach Anspruch 7, dadurch gekennzeichnet, daß der Höcker (11c) des Riegels (11) abgerundet ist.

9. Vorrichtung nach jedem der vorangegangenen Ansprüche, dadurch gekennzeichnet, daß die Blattfedern (12, 13) aus gestanzten Metall-Lamellen bestehen.

10. Vorrichtung nach jedem der Ansprüche 2 bis 9, dadurch gekennzeichnet, daß die Blattfedern (12, 13) voneinander getrennt sind.

11. Vorrichtung nach Anspruch 10, dadurch gekennzeichnet, daß die Blattfedern (12, 13) übereinander an einen Kontrollstab (7), welcher an dem Bolzen (6) befestigt ist, befestigt sind, wobei die Arretierungsfeder (12) kürzer als die Entriegelungsfeder (13) ist.

12. Vorrichtung nach eben der Ansprüche 2 bis 9, dadurch gekennzeichnet, daß die Blattfedern durch zwei parallele Federstreifen gebildet werden, welche nahe an einem einzelnen gestanzten Metall-Lammellenelement liegen, wobei die Federstreifen verschiebene Längen haben.

## Revendications

1. Dispositif de serrure anti-vol de direction pour véhicules automobiles, et en particulier du type associé à un commutateur d'allumage et de démarrage, comprenant :

un stator (2, 3)

une serrure à cylindre (4) actionnable au moyen d'une clef (5),

un verrou (6, 7) mobile axialement entre une position rétractée et une position sortie dans laquelle il peut verrouiller la direction ; le verrou (6, 7) étant maintenu en position rétractée par une came (8) fixée au cylindre de la serrure (4) à l'encontre de l'action de moyens élastiques (15) le sollicitant vers la position sortie ; et

des moyens de sécurité (9 à 13) pour ne permettre le mouvement du verrou (6, 7) vers la position sortie que lorsque la clef (5) est retirée de la serrure (4), les moyens de sécurité comportant un organe formant loquet (11) coulissant radialement dans un siège (10) du stator (3) et adapté à être repoussé radialement vers l'extérieur, du fait de l'introduction de la clef (5) dans la serrure, vers une position de travail dans laquelle il peut coopérer avec des moyens de retenue (12) pour retenir le verrou (6) en position rétractée jusqu'à l'extraction ultérieure de la clef (5), caractérisé en ce que les moyens de retenue comprennent un ressort à lame d'arrêt (12) fixée au verrou (6, 7) ; le ressort à lame d'arrêt (12) ayant une extrémité libre qui est inclinée de telle manière que, d'une part, il est appuyé de force sur le loquet (11) lorsque le loquet se trouve dans sa position extérieure et que le verrou (6, 7) se déplace de sa position sortie vers sa position rétractée, et d'autre part, qu'il réagit avec le loquet (11) de façon à ce qu'il empêche le verrou (6, 7) de revenir vers la position sortie tant que le loquet reste dans sa position de travail.

2. Dispositif selon la revendication 1, caractérisé en ce que le ressort à lame d'arrêt (12) est associé avec un ressort à lame supplémentaire (13) également fixé au verrou (6, 7) et ayant une extrémité libre qui peut interagir élastiquement avec le loquet (11) lorsque le verrou (6, 7) est maintenu en position sortie, et repousse le loquet (11) radialement vers la serrure à cylindre (4), lorsque la clef (5) est retirée de la serrure, pour dégager le ressort d'arrêt (12) et permettre au verrou (6, 7) de revenir à sa position sortie sous l'action dudit moyen de sollicitation élastique (15).

3. Dispositif selon la revendication 1 ou 2, caractérisé en ce que le ressort à lame d'arrêt (12), dans son état non déformé, se situe dans un plan incliné par rapport à la direction de déplacement du verrou (6, 7).

4. Dispositif selon l'une quelconque des revendications précédentes, caractérisé en ce que ledit ressort à lame supplémentaire, ou ressort de déverrouillage (13), se situe également dans un plan incliné par rapport à la direction de déplacement du verrou (6, 7) dans son état non déformé.

5. Dispositif selon la revendication 3, caractérisé en ce que le loquet (11) présente une saillie radiale (11a) définissant un épaulement d'arrêt (11b) sur lequel le ressort à lame d'arrêt (12) peut s'engager ; la surface de l'épaulement (11b) étant inclinée de telle manière que le ressort à lame d'arrêt (12) prenne appui sur celui-ci pratiquement perpendiculairement.

6. Dispositif selon la revendication 5, caractérisé en ce que la saillie (11a) du loquet (11) est arrondie pour faciliter le passage sur celle-ci du ressort à lame d'arrêt (12).

7. Dispositif selon l'une quelconque des revendications 4 à 6, caractérisé en ce que le loquet (11) présente une protubérance radiale (11c) pour interagir avec le ressort à lame supplémentaire (13).

8. Dispositif selon la revendication 7, caractérisé en ce que la protubérance (11c) du loquet (11) est arrondie.

9. Dispositif selon l'une quelconque des revendications précédentes, caractérisé en ce que les ressorts à lame (12, 13) sont constitués d'un métal en feuille découpé.

10. Dispositif selon l'une quelconque des revendications 2 à 9, caractérisé en ce que les ressorts à lame (12, 13) sont séparés l'un de l'autre.

11. Dispositif selon la revendication 10, caractérisé en ce que les ressorts à lame (12, 13) sont fixés l'un au-dessus de l'autre à une tige d'actionnement (7) fixée au verrou (6), le ressort d'arrêt (12) étant plus court que le ressort de déverrouillage (13).

12. Dispositif selon l'une quelconque des revendications 2 à 9, caractérisé en ce que les ressorts à lame sont constitués par deux pattes formant ressorts parallèles adjacentes à un élément métallique en feuille découpée, les pattes formant ressorts ayant des longueurs différentes.

FIG. 1

EP 0 210 962 B1

FIG. 2

FIG. 3

FIG. 4

FIG. 5